# FASCICULE DE BREVET EUROPEEN

(11) **EP 0 657 133 B1**
(45) Date de publication et mention de la délivrance du brevet: **10.03.1999**
(21) Numéro de dépôt: 94420351.2
(22) Date de dépôt: 09.12.1994
(51) Int. Cl.: A47J 37/06

(54) **Capteur CTN sur support souple pour gril-viande**
NTC-Temperaturfühler auf nachgiebigem Träger in einem Fleischgrillgerät
NTC-sensor on resilient support used for a meat grilling plate

(30) Priorité: 10.12.1993 FR 9315132
(43) Date de publication de la demande: 14.06.1995
(73) Titulaire: SEB S.A., 69130 Ecully (FR)
(72) Inventeur: Renk, Rémi, F-88200 Remiremont (FR); Thiriat, Sylvain, F-88200 Remiremont (FR); Klinger, Michel, F-68140 Stosswihr (FR); Battu, Claude, F-88120 le Syndicat (FR)

(56) Documents cités:
- EP-A- 0 514 681
- FR-A- 2 302 067
- FR-A- 2 400 302
- PATENT ABSTRACTS OF JAPAN vol. 14, no. 559 (C-0787) 12 Décembre 1990 & JP-A-02 239 818 (HITACHI HEATING APPLIANCE CO) 21 Septembre 1990
- PATENT ABSTRACTS OF JAPAN vol. 15, no. 256 (C-0845) 28 Juin 1991 & JP-A-03 086 114 (MITSUBISHI ELECTRIC HOME SUPPLIANCE CO LTD) 11 Avril 1991
- PATENT ABSTRACTS OF JAPAN vol. 16, no. 443 (C-0985) 16 Septembre 1992 & JP-A-04 156 806 (MATSUSHITA ELECTRIC IND CO) 29 Mai 1992

## Description

La présente invention concerne l'agencement d'un capteur thermique dans un appareil à griller, du type gril-viande. L'invention s'applique au domaine des appareils à griller et/ou à cuire constitués d'un bâti par exemple en matériau non métallique. Il est évident que l'invention ne se limite pas à des gril-viande et que tout appareil destiné à la cuisson d'aliments peut être concerné par l'objet de la présente invention.

Il est déjà connu, comme cela est décrit dans le brevet US-4762058, de réaliser un gril-viande dont le bâti présente une structure plastique ne résistant pas à des températures de chauffe élevées. Ce brevet décrit un gril-viande présentant deux plaques de cuisson destinées à cuire un morceau de viande sur sa surface supérieure et inférieure. Pour assurer un meilleur transfert thermique des plaques de cuisson vers le morceau de viande, les plaques de cuisson exercent une pression mécanique sur ledit morceau de viande par l'intermédiaire d'un ressort agencé sur le bâti. En outre l'appareil décrit dans ce document, comporte une ceinture d'eau destinée à étanchéifier la chambre de cuisson et à permettre une cuisson dans une atmosphère saturée en vapeur d'eau. La pression mécanique exercée par les plaques de cuisson sur l'article à griller ainsi que l'atmosphère saturée en vapeur d'eau permettent ainsi de réduire le temps de cuisson d'une part et de diminuer la température de cuisson d'autre part. L'utilisation d'un matériau plastique à faible coût pour la réalisation du bâti de l'appareil à griller est alors possible. L'appareil à griller présente néanmoins un certain nombre de désavantages qui ne peuvent satisfaire l'utilisateur. En effet, pour diminuer l'inertie et les pertes thermiques, l'appareil décrit dans ce document a recours à des solutions telles qu'une atmosphère saturée en vapeur d'eau et une pression mécanique sur l'article à griller, augmentant ainsi la difficulté de conception et le coût de fabrication d'un tel appareil.

Il est également connu, par le document JP-A-3086114, de réaliser un appareil de cuisson électrique, à plaque chauffante amovible, réflecteur thermique et éléments chauffants, présentant un actionneur thermique monté élastiquement sur la base de l'appareil, cet actionneur étant un bilame. Une pièce métallique est positionnée sur ce bilame, de sorte que le montage élastique permette une pression de la pièce métallique sur la plaque de chauffe, afin d'assurer un bon contact thermique. En fonctionnement, le bilame permet d'interrompre le circuit électrique d'alimentation de l'élément chauffant. Un tel appareil, compte tenu de la forte inertie thermique des bilames, ne peut éviter la surchauffe de la plaque de cuisson et ne permet donc pas l'utilisation d'un matériau plastique pour l'habillage du bâti. De plus, cet appareil ne permet pas d'ajuster la température de chauffe, par exemple à des valeurs établies par un thermostat, pour ainsi satisfaire aux exigences de cuisson de divers types d'aliments.

L'objet de la présente invention est de fournir à l'utilisateur un appareil à griller comportant un bâti en matériau plastique, par exemple, dans lequel le capteur de température fournit une image plus précise et plus rapide de la température de cuisson, pour optimiser la cuisson ou une cuisson successive de plusieurs articles, sans avoir recours à une atmosphère de cuisson saturée en vapeur d'eau.

Un autre objet de la présente invention est de limiter la montée en température dudit appareil lors de la cuisson de manière à pouvoir utiliser notamment un matériau plastique de faible coût pour réaliser le bâti de l'appareil conforme à l'invention.

Un objet supplémentaire de la présente invention est de fournir un appareil à griller ou de cuisson dans lequel l'utilisateur peut régler la température de cuisson de manière continue.

Un objet additionnel de la présente invention est de réduire le nombre de pièces constituant ledit appareil et par conséquent d'en réduire le coût de fabrication, tout en maitrisant les flux thermiques et l'inertie thermique lors d'une cuisson.

Les objets assignés à l'invention sont atteints à l'aide d'un appareil à griller ou à cuire comportant les caractéristiques de la revendication 1.

Des caractéristiques et avantages de l'invention ressortiront mieux à la lecture de la description donnée ci-après à titre d'exemples non limitatifs, en référence aux dessins annexés dans lesquels :
- La figure 1 représente une vue en perspective du fond du réflecteur agencé dans l'appareil à griller conforme à l'invention.
- La figure 2 représente selon une vue de dessus un exemple de réalisation du support du capteur thermique avant son montage et conforme à l'invention.
- La figure 3 représente selon une vue en perspective le support du capteur thermique tel que monté dans l'appareil à griller et conforme à l'invention.
- La figure 3a représente selon une vue en perspective une variante de réalisation du support du capteur thermique conforme à l'invention.
- La figure 4 représente une vue partielle en coupe de l'ensemble constituant l'appareil à griller avec un éclaté partiel, conforme à l'invention.
- La figure 5 représente un exemple de réalisation du circuit électronique de régulation et/ou le contrôle conforme à l'invention.

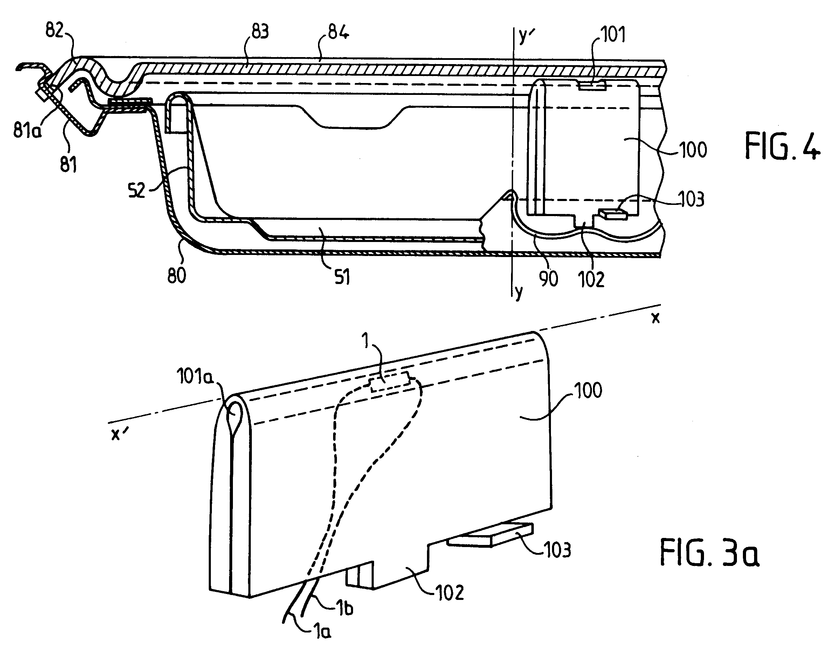

Dans la réalisation conforme à l'invention, représentée à la figure 4, l'appareil à griller comporte un bâti, non représenté aux figures et réalisé par exemple en matière plastique, par exemple du polypropylène, une cuve 80, une pièce de liaison 81, une plaque de cuisson 82, ainsi qu'un réflecteur thermique 52. La cuve 80, de préférence métallique, est fixée ou agencée sur le bâti plastique par l'intermédiaire d'entretoises réalisées, par exemple en plastique technique hautes températures, ou tout autre matériau résistant à des températures élevées, ou réfractaire. La pièce de liaison 81, également métallique soutient la plaque de cuisson 82. Le contact entre la pièce de liaison 81 et la plaque de cuisson 82 est limité à une faible surface 81a, de manière à réduire au maximum l'échange thermique par conduction entre ladite plaque de cuisson 82 et la pièce de liaison 81 et par conséquent la cuve 80. L'appareil à griller conforme à l'invention comporte également un réflecteur thermique 52 agencé et positionné dans la cuve 80. Ce réflecteur thermique 52 est de préférence réalisé en aluminium ou tout autre matériau réfléchissant les rayonnements infrarouges.

Avantageusement le réflecteur thermique 52 se présente également sous forme de cuve ou contenant, fixé à l'intérieur de la cuve 80 en divers points de contact, mais de manière à limiter le transfert thermique du réflecteur thermique 52 vers la cuve 80. Les points de contact sont réalisés par exemple par 3 ou 4 entretoises ou ergots métalliques agencés sur le réflecteur 52 et se logeant dans des orifices prévus à cet effet dans la cuve 80. La majeure partie du réflecteur thermique 52 ne se trouve donc pas en contact avec la cuve 80. Le réflecteur thermique 52 comporte également un fond 50 qui présente par exemple une gorge 51, laquelle est destinée à recevoir un élément chauffant 4. Le fond 50 présente également une fente 53 par laquelle émerge un support 100 du capteur thermique 1. Selon une variante de réalisation de l'appareil à griller conforme à l'invention le fond 50 présente une surélévation au voisinage de la fente 53, ce qui permet de ménager un espace libre plus important entre le fond de la cuve 80 et le fond 50 du réflecteur thermique 52.

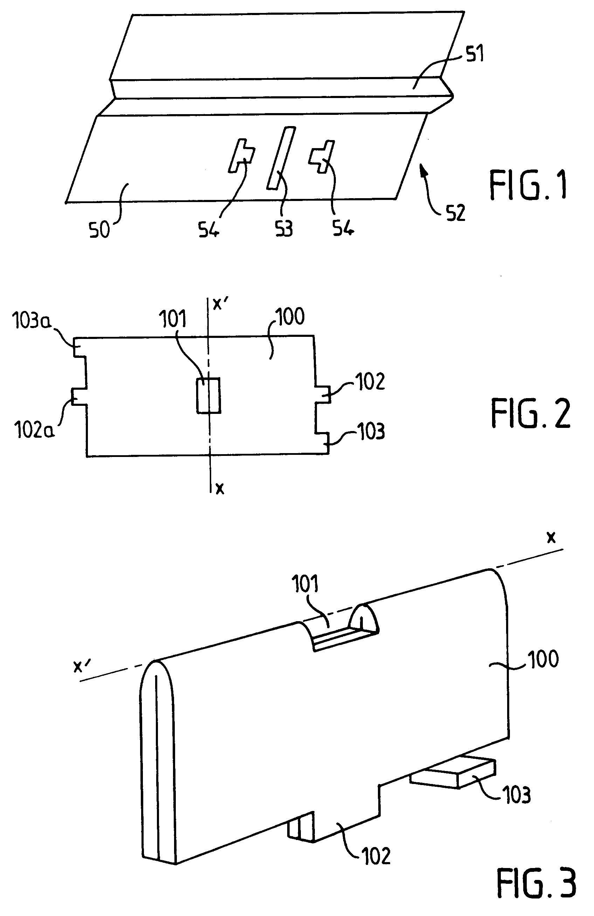

Le support 100 représenté aux figures 2, 3, 3a et 4 est une languette traversant le fond 50 du réflecteur thermique 52 par la fente 53. La languette traverse donc le fond 50 du réflecteur thermique 52, et s'étend au moins en partie dans l'espace libre délimité par le réflecteur thermique 52 et la plaque de cuisson 82; Le support 100 est réalisé à partir d'une languette métallique rectangulaire d'épaisseur suffisamment limitée pour permettre un pliage de ladite languette sur elle-même suivant un axe x,x' représenté aux figures 2, 3a et 3. Avantageusement le support 100 est une languette en aluminium, mais d'autres matériaux du type céramique, silicone ou plastique technique hautes températures peuvent convenir. Le support 100 présente des pattes 102 et 102a symétriques par rapport à l'axe x,x' ainsi qu'une oreille 103 et une oreille 103a à chaque extrémité de la languette métallique définissant le support 100. Les oreilles 103 et 103a sont disposées de part et d'autre de l'axe x-x' de manière à ne pas venir en regard l'une de l'autre après pliage de la languette métallique selon l'axe x-x' pour réaliser le support 100, tel qu'il sera monté dans l'appareil à griller. La languette métallique présente également un évidement rectangulaire et centré sur l'axe x,x'. La languette métallique une fois repliée sur elle-même selon l'axe x,x' présente ainsi par l'intermédiaire de l'évidement rectangulaire une cavité 101 dans une zone extrème supérieure du support 100. Les pattes 102 et 102a viennent en regard l'une de l'autre et de préférence en contact après le pliage de la languette métallique suivant l'axe x,x' et les oreilles 103 et 103a peuvent aisément être repliées vers l'extérieur du support 100, jusqu'à une position sensiblement perpendiculaire au plan d'extension dudit support 100. Les oreilles 103 et 103a servent ainsi de butée, de part et d'autre du support 100 sur la surface inférieure du fond 50. Le pliage de la languette est effectué de manière à permettre aux fils électriques reliés au capteur thermique 1, de se loger à l'intérieur du support 100.

Selon une variante de réalisation de l'appareil conforme à l'invention, représenté à la figure 3a, le capteur thermique 1 est agencé dans un volume interne 101a, d'une partie du support 100 en regard avec la plaque de cuisson 82. Le volume interne 101a, réalisé mécaniquement par tout moyen connu et notamment par emboutissage, permet de protéger le capteur thermique 1 de chocs ou d'usures éventuelles. L'épaisseur de la couverture métallique ainsi obtenue, du capteur thermique 1, est choisie de manière à ne pas altérer sensiblement les performances dudit capteur. L'épaisseur de la couverture et de la languette métallique ne dépasse pas 1 millimètre de préférence.

L'appareil à griller conforme à l'invention comporte également une lame élastique 90 présentant une raideur suffisante pour positionner ou caler élastiquement le support 100, dans sa zone extrème supérieure, contre la plaque de cuisson 82. La lame élastique 90 est de préférence montée sur le réflecteur 52 par l'intermédiaire d'une encoche 54 de part et d'autre de la fente 53. Les extrémités de la lame élastique 90 viennent se fixer dans lesdites encoches 54 par tous moyens connus. Les pattes 102 et 102a permettent ainsi d'accrocher la lame élastique 90 ou bien de venir en appui contre celle-ci. Ainsi le support 100 est mobile élastiquement dans au moins une direction. En effet les pattes 102 et 102a viennent en appui sur la lame élastique 90 ou se fixer sur celle-ci et permettent au support 100 de se déplacer verticalement, de haut en bas par exemple, lors du montage et du démontage de la plaque de cuisson 82. La faible taille des pattes 102 et 102a, la faible largeur du support 100 ainsi que le jeu mécanique entre la fente 53 et le support 100 autorisent ce dernier à se mouvoir dans plusieurs directions et notamment par un mouvement de rotation ou de basculement suivant divers axes de rotation ou de basculement. Le support 100 présente donc des pattes 102 et 102a destinées à solidariser ledit support 100 avec un moyen élastique ou flexible du type lame élastique 90 ou ressort, pour soumettre ledit support 100 à une force de rappel.

En outre selon une variante de réalisation préférentielle de l'appareil à griller conforme à l'invention, les plaques de cuisson 82 sont amovibles. De cette manière lorsque la plaque de cuisson 82 n'est pas mise en place, la lame élastique 90 positionne le support 100 en position extrème haute. Le déplacement vertical vers le haut du support 100 est interrompu par les oreilles 103 et 103a qui viennent en butée contre la surface inférieure du fond 50. La configuration des pattes 102 et 102a, de même que la dimension de la fente 53, laquelle permet un passage facile du support 100, c'est à dire avec un jeu suffisant. Ce dernier permet au dit support 100 de se mouvoir notamment avec plusieurs degrés de liberté. Ainsi lors de la mise en place de la plaque de cuisson 82 le support 100, par sa partie extrème supérieure qui vient en contact avec la plaque de cuisson 82, s'adapte parfaitement à la morphologie et à l'inclinaison éventuelle de la surface inférieure de ladite plaque de cuisson 82. En outre le support 100 est repoussé vers le bas lorsque la plaque de cuisson 82 est mise en place. Ceci est possible grâce à l'utilisation de la lame élastique 90 soumise à une torsion et/ou une compression lors du mouvement vers le bas dudit support 100. Une fois mise en place la plaque de cuisson 82 maintient de manière stable le support 100 par la pression qu'elle exerce sur ce dernier. La cavité 101 se trouve donc constamment à la même distance de la plaque de cuisson 82.

Le capteur thermique 1 est disposé dans la cavité 101 ménagée dans une partie du support 100 en regard avec la plaque de cuisson 82. Le capteur thermique 1 peut selon une variante de réalisation être en contact direct avec la plaque de cuisson 82. Avantageusement le capteur thermique 1 est en contact avec la plaque de cuisson 82 par l'intermédiaire d'une couche ou gaine isolante électrique entourant ledit capteur thermique 1. La couche ou gaine isolante électrique entourant le capteur thermique 1 est constituée de polytétrafluoroéthylène par exemple, présentant une épaisseur de quelques dixièmes de millimètres. Selon une autre variante de réalisation de l'appareil à griller conforme à l'invention, la plaque de cuisson 82 présente un logement, non représenté aux figures, destiné à recevoir et positionner le support 100. Ce dernier par sa partie supérieure extrème, en regard de la plaque de cuisson 82, s'introduit légèrement dans ce logement.

La faible taille du capteur thermique 1, comme celle d'une résistance CTN, par exemple, logée dans la cavité 101 d'une part, et en regard de la plaque de cuisson 82 d'autre part permet au capteur thermique 1 d'être protégé au moins partiellement des rayonnements infrarouges émis directement par les éléments chauffants ou réfléchis par le réflecteur thermique 52. Le capteur thermique 1 est donc soumis principalement au flux thermique direct issu de la plaque de cuisson 82. Le flux thermique direct doit être entendu comme le flux rayonné et conduit ne provenant pas, dans une proportion prépondérante, du réflecteur thermique 52 et/ou des éléments chauffants 4 directement.

La plaque de cuisson 82 est réalisée de préférence à partir d'aluminium ou d'un assemblage aluminium-acier-aluminium dont l'épaisseur ne dépasse pas deux millimètres de préférence et dont la face, en regard des éléments chauffants 4 est recouverte d'une couche de polytétrafluoroéthylène d'une épaisseur de quelques micromètres par exemple pour augmenter le coefficient d'absorption du rayonnement de ladite plaque. La plaque de cuisson 82 absorbe le flux thermique issu des éléments chauffants 4 et du réflecteur thermique 52 et le restitue rapidement aux articles à griller. La faible épaisseur de la plaque de cuisson 82, c'est à dire sa faible inertie thermique contribue, en association avec les moyens de régulation et/ou de contrôle de température, à réaliser un appareil à griller à rendement optimisé. L'appareil à griller conforme à l'invention n'utilise plus, au cours de son fonctionnement, une énergie thermique emmagasinée ou stockée dans une ou plusieurs plaques de cuisson 82.

L'appareil à griller conforme à l'invention est constitué de deux parties rabattables l'une sur l'autre par l'intermédiaire d'une charnière par exemple ou tout autre moyen pivotant du type articulation permettant de ramener la plaque de cuisson 82 contre une plaque de cuisson supplémentaire et identique à la plaque de cuisson 82. Ainsi l'article à griller, à rôtir ou à cuire se trouve emprisonné entre deux plaques de cuisson 82. Les plaques de cuisson 82 sont évidemment fixées sur la cuve 50 par l'intermédiaire de la pièce de liaison 81 ce qui permet de maintenir ladite plaque de cuisson 82 solidaire de la cuve et par conséquent du bâti et de l'ensemble de l'appareil à griller, ainsi que de maintenir en position de régulation le support 100 et le capteur thermique 1. La pièce de liaison 81 est sensiblement élastique ou flexible de manière à permettre à l'utilisateur de l'appareil à griller de désolidariser la plaque de cuisson 82 dudit appareil à griller pour la nettoyer. Lors de la remise en place de la plaque de cuisson 82, laquelle est de préférence ondulée, le capteur thermique 1 revient dans une position idéale sous la plaque de cuisson 82 par l'intermédiaire de la lame élastique 90 exerçant une pression élastique sur le support 100. Les nombreux degrés de liberté du support 100 permettent ainsi d'utiliser dans un appareil à griller conforme à l'invention des plaques de cuisson 82 de structure ou de forme externe différente. Le capteur thermique 1 sera quoi qu'il arrive toujours amené dans une position idéale de régulation de la température de ladite plaque de cuisson 82.

Avantageusement, un limiteur thermique est agencé sur l'extérieur de la cuve 80 de la partie supérieure de l'appareil à griller, de manière à ne pas dépasser le seuil thermique toléré par le bâti, réalisé par exemple en matériau plastique à faible coût, du type polypropylène. Le limiteur thermique constitue donc un moyen de sécurité supplémentaire.

Le capteur thermique 1 constitué de préférence d'une résistance électrique thermovariable du type résistance CTN est avantageusement en contact avec la plaque de cuisson 82 par l'intermédiaire d'une couche ou gaine isolante électrique et thermiquement résistante entourant ledit capteur thermique 1. Selon une variante de réalisation de l'appareil conforme à l'invention, la gaine isolante électrique ne recouvre que des fils électriques 1a et 1b reliés à la résistance CTN, laquelle étant recouverte intrinsèquement d'un matériau isolant électrique. Le capteur thermique 1 est en contact thermique avec au moins une plaque de cuisson 82.

En effet l'appareil à griller conforme à l'invention peut de manière avantageuse être réalisé en deux parties rabattables l'une sur l'autre pour griller, cuire ou rôtir sur deux faces différentes. Le capteur thermique 1 sera alors en contact avec la plaque de cuisson 82 inférieure, de préférence, car c'est sur cette dernière que stagnent ou s'écoulent de l'eau et de la graisse issues de la cuisson, ce qui influence fortement la régulation en température de la cuisson. Avantageusement le capteur thermique 1 est une résistance CTN entourée ou enveloppée dans une couche ou gaine isolante électrique et thermiquement résistante. Le matériau avec lequel la résistance CTN est entourée est de préférence du polytétrafluoroéthylène. La taille réduite d'une résistance CTN permet ainsi de réaliser un capteur thermique 1 de très faible inertie thermique. Un tel capteur thermique 1 donne ainsi une image fidèle et instantanée de la température de la plaque de cuisson 82. La présence de liquides sur la plaque de cuisson peut effectivement altérer le bon fonctionnement de l'appareil à griller, car une quantité d'énergie thermique importante est nécessaire pour évaporer lesdits liquides et surtout pour passer d'une phase liquide à une phase vapeur, ce qui provoque une perte thermique importante. Il est donc souhaitable d'incliner légèrement les plaques de cuisson 82 afin de favoriser un écoulement rapide des liquides et jus issus de l'article à griller, notamment dans des creux d'ondulations, que peut présenter la plaque de cuisson 82. Il peut être envisagé de donner à ces ondulations une configuration telle, que les écoulements convergent vers une gorge réalisée sur la plaque de cuisson 82 inférieure et débouchant vers l'extérieur de l'appareil à griller.

Selon une autre variante de réalisation de l'appareil à griller conforme à l'invention, le capteur thermique 1 n'est pas entouré d'une gaine isolante électrique avant son montage sur le support 100. L'isolation électrique est alors obtenue par un dépôt d'un film isolant électrique du type plastique technique hautes températures sur la partie centrale et interne du support 100 avant le pliage selon l'axe x-x'. Ainsi les parties électriquement conductrices du capteur thermique 1 ou des fils électriques sont protégés lorsque le support 100 se présente sous une configuration repliée ou prête au montage dans l'appareil à griller.

Il peut être envisagé selon une autre variante de réalisation de l'appareil à griller conforme à l'invention d'utiliser des éléments chauffants 4 de puissance thermique différente dans les parties inférieure et supérieure de l'appareil à griller, pour compenser les phénomènes de changement de phase sur la plaque de cuisson 82 inférieure.

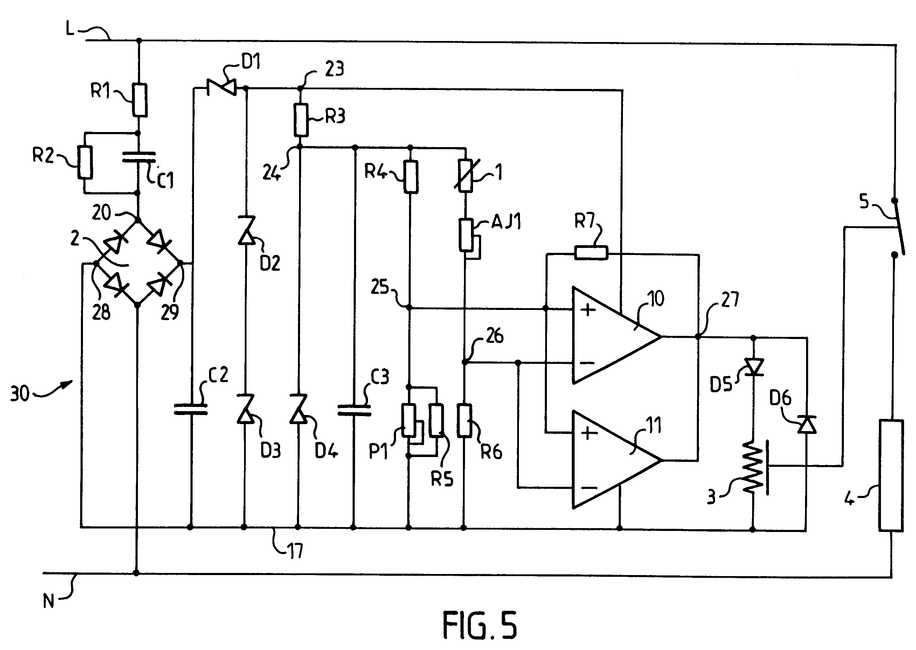

Le capteur thermique 1, lequel est entouré d'une couche isolante électrique est associé à un circuit électronique 30 de régulation et/ou de contrôle réalisant deux alimentations distinctes à basse tension. L'ensemble du circuit électronique 30 représenté à la figure 5 est alimenté par l'alimentation électrique du secteur, aux bornes de connexion L et N correspondant respectivement à la phase et au neutre dudit secteur. Les éléments chauffants 4 sont également reliés à l'alimentation du secteur par l'intermédiaire d'un interrupteur 5, lequel est commandé par un relais de commande 3. Ce dernier est actionné en fonction des informations recueillies par le capteur thermique 1, c'est à dire la résistance CTN. Les informations sont ensuite traduites par le circuit électronique 30, lequel gère l'alimentation du relais de commande 3.

Le circuit électronique 30 présente entre la phase L et un point de connexion 20 une résistance R1 en série avec un condensateur C1 lequel présente en parallèle une résistance R2. Le point de connexion 20 est ensuite relié au neutre N du secteur à travers un pont redresseur 2, double alternance comportant 4 diodes. Un point de connexion 28 du pont redresseur 2 représente une référence de masse 17 de tout le circuit électronique 30. Un point de connexion 29 sert d'alimentation électrique continue du circuit électronique 30. Le point de connexion 29 est relié d'une part à la référence de masse 17 à travers un condensateur C2 et d'autre part à une diode zéner D1. La diode zéner D1 est reliée d'une part à la référence de masse 17 à travers une diode zéner D2 et une diode zéner D3 en série et d'autre part à une résistance R3 au point de connexion 23. Le point de connexion 23 sert également d'alimentation d'un ensemble constitué de deux comparateurs 10 et 11. Le point de connexion 23 est à un potentiel de 24 Volts. La résistance R3 est également reliée à la référence de masse 17 à travers une diode zéner D4. Un point de connexion 24 situé entre la résistance R3 et la diode zéner D4 se trouve à un potentiel de 12 volts et sert d'alimentation électrique continue à la résistance CTN utilisée comme capteur thermique 1. Le point de connexion 24 se trouve donc relié à la référence de masse 17 à travers la résistance CTN, un potentiomètre ajustable AJ1, et une résistance R6 branchés en série. Un point de connexion 26 situé entre le potentiomètre ajustable AJ1 et la résistance R6 sert d'entrée négative sur les comparateurs 10 et 11. Le point de connexion 24 se trouve également relié à la référence de masse 17 à travers une résistance R4 branchée en série avec un potentiomètre ajustable P1, lequel comporte branché en parallèle une résistance R5. Le point de connexion 25, entre la résistance R4 et le potentiomètre P1 sert d'entrée positive aux comparateurs 10 et 11. Les sorties des comparateurs 10 et 11 se rejoignent au point de connexion 27, lequel est également relié aux entrées positives des comparateurs 10 et 11 à travers une résistance R7 de contre réaction. Le point de connexion 27 est également relié à la référence de masse 17 à travers une diode D5 branchée en série avec le relais de commande 3. Le circuit électronique 30 présente également une diode D6 branchée entre la référence de masse 17 et le point de connexion 27 et dont le sens passant est dirigé de la référence de masse 17 vers le point de connexion 27. Le relais de commande 3 est bien évidemment relié mécaniquement à l'interrupteur 5.

Préférentiellement la résistance R3, branchée entre le point de connexion 23 et le point de connexion 24, est choisie de manière à fournir une alimentation continue de 12 Volts au point de connexion 24, en utilisant le potentiel de 24 Volts au point de connexion 23. L'alimentation continue de 24 Volts est destinée à alimenter la sortie des comparateurs 10 et 11 et l'alimentation continue de 12 Volts du point de connexion 24 est destinée à appliquer une tension électrique aux entrées positives et négatives des comparateurs 10 et 11 par l'intermédiaire des points de connexion 25 et 26 représentant des diviseurs de tension. Préférentiellement le circuit électronique 30 ne comporte pas de transformateur d'isolement pour réaliser son alimentation électrique. Une telle simplification est possible lorsque le capteur thermique 1 est isolé électriquement. La diode D6 branchée entre le point de connexion 27 et la référence de masse 17 autorise un retour du courant électrique lors de la coupure de l'alimentation du relais de commande 3. Les diodes zéner D1, D2, D3, D4 servent à limiter ou réguler la tension électrique dans les branches correspondantes et éventuellement de fournir une faible tension destinée à alimenter des moyens complémentaires du type, minuterie ou sonnerie. Le condensateur C2 et un condensateur C3 branchés respectivement entre les points de connexion 29, 24, et la référence de masse 17, permettent de stabiliser les alimentations continues de 24 Volts et de 12 Volts. Le potentiomètre P1 correspond au bouton de commande de la température de consigne fixée par l'utilisateur de l'appareil à griller. Le potentiomètre ajustable AJ1 est ajusté une fois pour toutes lors de la construction de l'appareil. Il n'est pas accessible à l'utilisateur et il tient compte de différents paramètres du réglage des composants du circuit électronique 30 et notamment de ceux de la résistance CTN. Le condensateur C1 présente une impédance qui permet de limiter la tension aux bornes du pont de redresseur 2, c'est à dire entre le point de connexion 20 et le neutre N du secteur. La résistance R2 branchée en parallèle avec le condensateur C1 permet de décharger le condensateur C1 lors d'une coupure d'alimentation du secteur et constitue ainsi un organe de sécurité vis à vis de l'utilisateur, ledit organe ne présentant par ailleurs pas d'échauffement, comparé à l'utilisation d'une unique résistance électrique. La résistance R7 de contre réaction positive permet de limiter les frétillements du relais de commande 3. Ce phénomène se produit essentiellement lorsque la température de consigne est voisine de la température effective des plaques de cuisson 82, ladite température étant lue par la résistance CTN. Ceci peut provoquer des coupures successives de l'alimentation du relais de commande 3 et peut contribuer à limiter la durée de vie dudit relais de commande 3.

Lorsque la température de cuisson augmente, la résistance CTN présente une résistance électrique plus faible, ce qui provoque une élévation du potentiel électrique au point de connexion 26, lequel est relié aux entrées négatives des comparateurs 10 et 11. Lorsque le potentiel appliqué auxdites entrées négatives 10 et 11 devient supérieur au potentiel appliqué aux entrées positives desdits comparateurs 10 et 11 par l'intermédiaire du point de connexion 25, le signal de sortie des comparateurs 10 et 11 est dans un état bas. Le point de connexion 27 et le relais de commande 3 ne sont par conséquent plus alimentés, ce qui provoque une ouverture de l'interrupteur 5 et une coupure de l'alimentation électrique des éléments chauffants 4. Le potentiel électrique au point de connexion 25 dépend évidemment du réglage de la température de consigne et par conséquent du potentiomètre P1. Lorsque la température des plaques de cuisson 82 baisse, par exemple par la mise en place d'un article à griller entre les plaques de cuisson 82, la résistance électrique de la résistance CTN augmente et par conséquent le potentiel électrique au point de connexion 26 diminue, et dès que ce dernier atteint un niveau inférieur au potentiel du point de connexion 25, qui correspond aux entrées positives des comparateurs 10 et 11, un signal électrique, en l'occurrence une tension de 24 Volts, se trouve appliqué au point de connexion 27, c'est à dire à l'alimentation du relais de commande 3. L'interrupteur 5 est ainsi à nouveau fermé et les éléments chauffants 4 sont alimentés. Ainsi lorsque la température lue par le capteur thermique 1 est inférieure à la température de consigne fixée par le potentiomètre P1, le relais de commande 3 ferme l'interrupteur 5 alimentant les éléments chauffants 4 par l'intermédiaire du secteur.

Selon une variante de réalisation du circuit électronique 30 conforme à l'invention, il est envisageable de remplacer la résistance R7 de contre réaction positive par un condensateur chimique, non représenté aux figures, branché entre le point de connexion 27 et la référence de masse 17. L'avantage de ce mode particulier de réalisation réside dans le fait que l'hystérésis introduit sur le signal d'entrée des comparateurs 10 et 11 ne dépend pas du réglage du potentiomètre P1.

Selon une autre variante de réalisation de l'appareil à griller conforme à l'invention, le capteur thermique 1 est constitué d'une résistance CTP ou d'une résistance CTN radiale.

Un avantage de l'appareil à griller conforme à l'invention réside dans la réalisation d'un support 100 pour le capteur thermique 1, souple et flexible, par l'intermédiaire de sa fixation sur une lame élastique 90, laquelle positionne le capteur thermique 1 de manière optimale pour obtenir une image parfaite et instantanée de la température de la plaque de cuisson 82. Ainsi les dépassements d'un seuil de température liés à l'inertie thermique de l'ensemble, sont évités. Il est donc facilement concevable d'utiliser un bâti en matière plastique bas de gamme pour réaliser l'appareil à griller conforme à l'invention.

Un autre avantage de l'appareil à griller conforme à l'invention, réside dans l'utilisation de plaques de cuisson 82 amovibles, ce qui permet de les nettoyer très aisément après une cuisson.

Un avantage supplémentaire de l'appareil à griller conforme à l'invention permet par l'intermédiaire d'une régulation fiable et précise en température de procéder à des cuissons successives d'articles alimentaires en altérant nullement la qualité de cuisson ou de grillage ou le temps de cuisson.

Un avantage supplémentaire de l'appareil à griller conforme à l'invention réside dans le fait d'utiliser un capteur thermique 1, par exemple une résistance CTN entouré d'une gaine ou couche isolante électrique, permettant ainsi de ne plus utiliser un transformateur d'isolation dans l'alimentation électrique. Le capteur thermique 1 ou ses connexions électriques ne présentent plus de parties conductrices électriques susceptibles de venir en contact avec la plaque de cuisson 82 ou tout autre partie en liaison électrique avec la masse. La sécurité électrique d'utilisation n'est donc pas affectée.

Un avantage supplémentaire d'un appareil à griller conforme à l'invention réside dans l'utilisation d'un circuit électronique 30, en association avec le capteur thermique 1, réalisant deux alimentations électriques continues à basse tension, l'une de 24 Volts destinée à alimenter les comparateurs 10 et 11 et l'autre de 12 Volts destinée à alimenter le capteur thermique 1 du type résistance CTN. Ainsi la consommation électrique de la résistance CTN est diminuée, ce qui réduit son auto-échauffement et par conséquent augmente sa précision. Le signal électrique issu de l'alimentation continue de 12 Volts présente par ailleurs, une ondulation résiduelle plus faible que le signal électrique issu de l'alimentation continue de 24 Volts, contribuant ainsi à l'obtention de meilleures précisions de régulation. Le relais de commande 3 est alimenté par une tension de 24 Volts par l'intermédiaire des comparateurs 10 et 11, limitant ainsi l'intensité du courant d'alimentation du relais de commande 3 à environ 16 milli-ampères. La faible consommation de courant du relais de commande 3 permet une utilisation de la diode D5, sans avoir recours à une résistance électrique de limitation supplémentaire. En outre, une résistance R5 est branchée en parallèle sur le potentiomètre P1 de manière à réduire les dispersions ohmiques que peut présenter ce dernier, à 2 pour cent environ. Une dispersion ohmique de l'ordre de 20 pour cent pour le potentiomètre P1 pris individuellement est améliorée de manière simple.

Un autre avantage de l'appareil à griller conforme à l'invention réside dans l'utilisation de matériels peu coûteux. La gaine isolante électrique 30 entourant le capteur thermique 1 est par exemple une gaine thermorétractable. Le circuit électronique 30 comportant les deux comparateurs 10 et 11 et par exemple un circuit LM358, dans lequel on associe les deux étages pour obtenir un courant de sortie suffisant pour alimenter le relais de commande 3 fonctionnant sous une tension continue de 24 Volts.

Un avantage supplémentaire de l'appareil à griller conforme à l'invention réside d'une part dans une dispersion réduite de la température de la plaque de cuisson 82, et d'autre part dans l'obtention d'un temps de préchauffe réduit à 2 minutes 15 secondes. En outre l'appareil à griller conforme à l'invention présente l'avantage de réduire le temps de réaction, après la pause d'aliments à griller sur les plaques de cuisson 82, à un temps compris entre 3 et 15 secondes, permettant de cette manière d'obtenir un gain de temps sur des cuissons longues telles que des côtes de boeuf ou steaks hachés par exemple, et surtout une amélioration du grillage des steaks dans le cas de cuissons successives.

## Revendications

1. Appareil à griller ou à cuire comportant un bâti, au moins une plaque chauffante, des éléments chauffants (4), au moins un réflecteur thermique (52) pour réfléchir les rayonnements infrarouges émis par les éléments chauffants (4) répartis entre le réflecteur thermique (52) et la plaque chauffante, vers la plaque chauffante ainsi qu'un capteur thermique (1) destiné à la régulation en température dudit appareil et maintenu dans l'ambiance thermique de la plaque chauffante par l'intermédiaire d'un agencement mobile élastiquement, caractérisé en ce que :
- le bâti est réalisé en matière plastique,
- un capteur thermique (1) est constitué d'une résistance thermovariable logée sur l'extrémité d'un support (100) venant en contact avec la plaque chauffante constituée d'une plaque de cuisson (82) amovible, ledit support (100) subissant une force de rappel dans au moins une direction, à l'aide d'un moyen élastique associé audit support (100) pour soumettre la résistance thermovariable principalement au flux thermique direct issu de la plaque de cuisson (82).

2. Appareil selon la revendication 1 caractérisé en ce que le capteur thermique (1) est disposé dans une cavité (101) ménagée dans une partie du support (100) en regard avec la plaque de cuisson (82).

3. Appareil selon la revendication 1 caractérisé en ce que le capteur thermique (1) est agencé dans un volume interne (101a) d'une partie du support (100) en regard avec la plaque de cuisson (82).

4. Appareil selon l'une des revendications 1 ou 2 caractérisé en ce que le capteur thermique (1) est en contact avec la plaque de cuisson (82).

5. Appareil selon la revendication 4 caractérisé en ce que le capteur thermique (1) est en contact avec la plaque de cuisson (82) par l'intermédiaire d'une couche ou gaine isolante électrique entourant ledit capteur thermique (1).

6. Appareil selon l'une des revendications précédentes caractérisé en ce que le support (100) est une languette traversant le fond (50) du réflecteur thermique (52), ladite languette s'étendant au moins en partie dans l'espace libre délimité par le réflecteur thermique (52) et la plaque de cuisson (82).

7. Appareil selon l'une des revendications précédentes caractérisé en ce que le support (100) présente des moyens d'accrochages (102, 102a) destinés à solidariser le support (100) avec un moyen élastique ou flexible, du type lame élastique (90) ou ressort pour soumettre ledit support (100) à une force de rappel.

8. Appareil selon l'une des caractéristiques précédentes caractérisé en ce que la plaque de cuisson (82) présente un logement destiné à recevoir et positionner le support (100).

9. Appareil selon l'une des caractéristiques précédentes, caractérisé en ce que le capteur thermique (1) est associé à un circuit électronique (30) de régulation et/ou de contrôle thermique, réalisant deux alimentations électriques à basse tension.

10. Appareil selon l'une des revendications 5 à 9 caractérisé en ce que la couche ou gaine isolante électrique entourant le capteur thermique (1) est constituée de polytétrafluoroéthylène.

11. Appareil selon l'une des revendications précédentes caractérisé en ce que le capteur thermique (1) est constitué d'une résistance CTN.

12. Appareil conforme à l'une des revendications précédentes caractérisé en ce qu'il est constitué d'un gril-viande.

## Claims

1. A cooking or grilling appliance comprising a structure, at least one hotplate, heater elements (4), at least one heat reflector (52) for reflecting, towards the hotplate, infrared radiation emitted by the heater elements (4) which are distributed between the heat reflector (52) and the hotplate, and a temperature sensor (1) for regulating the temperature of said appliance, the sensor being maintained in the temperature environment of the hotplate by means of an elastically movable arrangement,
the appliance being characterized in that:
• the structure is made of plastics material; and
• a temperature sensor (1) is constituted by a temperature-variable resistor housed on the end of a support (100) coming into contact with the hotplate which is constituted by a removable cooking plate (82), said support (100) being subjected to a return force in at least one direction by resilient means associated with said support (100) to subject the temperature-variable resistor mainly to the direct heat flux from the cooking plate (82).

2. An appliance according to claim 1, characterized in that the temperature sensor (1) is disposed in a cavity (101) formed in a portion of the support (100) facing the cooking plate (82).

3. An appliance according to claim 1, characterized in that the temperature sensor (1) is disposed in an inside volume (101a) of a portion of the support (100) facing the cooking plate (82).

4. An appliance according to claim 1 or 2, characterized in that the temperature sensor (1) is in contact with the cooking plate (82).

5. An appliance according to claim 4, characterized in that the temperature sensor (1) is in contact with the cooking plate (82) via an electrically insulating sheath or layer surrounding said temperature sensor (1).

6. An appliance according to any preceding claim, characterized in that the support (100) is a tongue passing through the back (50) of the heat reflector (52), said tongue extending at least in part into the empty space defined between the heat reflector (52) and the cooking plate (82).

7. An appliance according to any preceding claim, characterized in that the support (100) has hook means (102, 102a) designed to secure the support (100) to flexible or resilient means of the spring or spring blade (90) type for subjecting said support (100) to a return force.

8. An appliance according to any preceding characteristic, characterized in that the cooking plate (82) has a housing for receiving and positioning the support (100).

9. An appliance according to any preceding characteristic, characterized in that the temperature sensor (1) is associated with an electronic circuit (30) for regulating and/or monitoring temperature, and delivering two low-voltage electrical power feeds.

10. An appliance according to any one of claims 5 to 9, characterized in that the electrically insulating sheath or layer surrounding the temperature sensor (1) is made of polytetrafluoroethylene.

11. An appliance according to any preceding claim, characterized in that the temperature sensor (1) is constituted by an NTC resistor.

12. An appliance according to any preceding claim, characterized in that it constitutes a meat-griller.

## Patentansprüche

1. Grill- oder Bratgerät, mit einem Gestell, mindestens einer Heizplatte, Heizelementen (4), mindestens einem Wärmereflektor (52) zum Reflektieren der von den Heizelementen (4), die zwischen dem Wärmereflektor (52) und der Heizplatte verteilt angeordnet sind, zur Heizplatte abgestrahlten Infrarotstrahlung, sowie einem Temperaturfühler (1), der zur Temperaturregelung des Geräts dient und durch eine federnd bewegliche Anordnung in der Temperaturumgebung der Heizplatte gehalten ist, dadurch gekennzeichnet, daß
- das Gestell aus Kunststoff hergestellt ist,
- ein Temperaturfühler (1) aus einem temperaturabhängigen Widerstand besteht, der am Ende eines Trägers (100) aufgenommen ist, welcher mit der aus einer abnehmbaren Bratplatte (82) bestehenden Heizplatte in Kontakt tritt, wobei der Träger (100) in zumindest eine Richtung durch ein dem Träger (100) zugeordnetes Federmittel mit einer Rückholkraft beaufschlagt ist, um den temperaturabhängigen Widerstand im wesentlichen dem direkten Wärmefluß aus der Bratplatte (82) auszusetzen.

2. Gerät nach Anspruch 1, dadurch gekennzeichnet, daß der Temperaturfühler (1) in einer Vertiefung (101) angeordnet ist, die in einem Teil des Trägers (100), der Bratplatte (82) gegenüberliegend, eingebracht ist.

3. Gerät nach Anspruch 1, dadurch gekennzeichnet, daß der Temperaturfühler (1) in einem Innenraum (101a) eines Teils des Trägers (100), der Bratplatte gegenüberliegend, ausgebildet ist.

4. Gerät nach Anspruch 1 oder 2, dadurch gekennzeichnet, daß der Temperaturfühler (1) mit der Bratplatte (82) in Kontakt steht.

5. Gerät nach Anspruch 4, dadurch gekennzeichnet, daß der Temperaturfühler (1) durch eine den Temperaturfühler (1) umschließende, elektrisch isolierende Schicht oder Hülle mit der Bratplatte (82) in Kontakt steht.

6. Gerät nach einem der vorhergehenden Ansprüche, dadurch gekennzeichnet, daß der Träger (100) eine Lasche ist, die den Boden (50) des Wärmereflektors (52) durchdringt, wobei die Lasche sich zumindest teilweise im durch den Wärmereflektor (52) und die Bratplatte (82) begrenzten Freiraum erstreckt.

7. Gerät nach einem der vorhergehenden Ansprüche, dadurch gekennzeichnet, daß der Träger (100) Einhängemittel (102, 102a) zur Befestigung des Trägers (100) mit einem federnden oder nachgiebigem Mittel vom Typ elastische Zunge (90) oder Feder aufweist, um den Träger (100) mit einer Rückholkraft zu beaufschlagen.

8. Gerät nach einem der vorhergehenden Ansprüche, dadurch gekennzeichnet, daß die Bratplatte (82) eine Aufnahme aufweist, um den Träger (100) aufzunehmen und zu positionieren.

9. Gerät nach einem der vorhergehenden Ansprüche, dadurch gekennzeichnet, daß dem Temperaturfühler (1) ein elektronischer Schaltkreis (30) zur Temperaturregelung und/oder -Steuerung zugeordnet ist, der zwei Niederspannungsversorgungen darstellt.

10. Gerät nach einem der Ansprüche 5 bis 9, dadurch gekennzeichnet, daß die den Temperaturfühler (1) umschließende, elektrisch isolierende Schicht oder Hülle aus Polytetrafluorethylen besteht.

11. Gerät nach einem der vorhergehenden Ansprüche, dadurch gekennzeichnet, daß der Temperaturfühler (1) aus einem NTC-Widerstand besteht.

12. Gerät nach einem der vorhergehenden Ansprüche, dadurch gekennzeichnet, daß es ein Fleischgrillgerät ist.
